# EUROPEAN PATENT SPECIFICATION

(11) **EP 3 870 010 B1**
(45) Date of publication and mention of the grant of the patent: **09.03.2022**
(21) Application number: 19813150.0
(22) Date of filing: 22.11.2019
(51) Int. Cl.: A47J 42/42

(54) **COFFEE BEAN FEEDER, SELECTING UNIT COMPRISING SUCH FEEDER AND COFFEE MACHINE COMPRISING SUCH SELECTING UNIT**
KAFFEEBOHNENZUFÜHRVORRICHTUNG, AUSWAHLEINHEIT MIT EINER SOLCHEN VORRICHTUNG UND KAFFEEMASCHINE MIT EINER SOLCHEN EINHEIT
DISPOSITIF D'ALIMENTATION EN GRAINS DE CAFÉ, UNITÉ DE SÉLECTION COMPRENANT UN TEL DISPOSITIF D'ALIMENTATION ET MACHINE À CAFÉ COMPRENANT UNE TELLE UNITÉ DE SÉLECTION

(30) Priority: 23.11.2018 IT 201800010537
(43) Date of publication of application: 01.09.2021
(73) Proprietor: Rancilio Group S.p.A., 20015 Villastanza Di Parabiago (MI) (IT)
(72) Inventor: BECK, Pascal, 5605 Dottikon (CH); POOPALASINGAM, Babeesan, 5605 Dottikon (CH); MUHEIM, Christian, 5605 Dottikon (CH)
(74) Representative: Robba, Pierpaolo
(86) International application number: PCT/IB2019/060076
(87) International publication number: WO 2020/105011

(56) References cited:
- EP-A1- 0 605 750
- FR-A1- 2 755 431
- US-A1- 2014 014 680

## Description

The present invention relates to a coffee bean feeder for feeding coffee beans coming from a coffee bean container to a coffee grinder.

More particularly, the present invention relates to a coffee bean feeder for selectively feeding coffee beans coming from a coffee bean container selected among a plurality of coffee bean containers to a coffee grinder.

The present invention also relates to a selecting unit comprising such coffee bean feeder.

The present invention also relates to a coffee machine, preferably a fully automatic coffee machine, comprising such selecting unit.

Fully automatic coffee machines, also called "coffee automats" are known and widespread, especially in the restaurant industry.

Such coffee machines work in a fully automatic way, i.e. it is sufficient that the user presses a button on an interface of the coffee machine for starting and carrying out the whole process of preparation of a coffee-based drink. This process essentially comprises the following steps: grinding the exact amount of coffee beans; accumulating the ground coffee powder in a suitable chamber; compacting and compressing the coffee powder until forming a "cake"; sending a dosed water flow at a predetermined temperature and pressure through said "cake"; collecting the coffee infusion and sending it downstream towards an outlet spout; dispensing the coffee infusion through said spout into a cup, or similar container.

In order to increase the versatility of these machines, fully automatic coffee machines that are adapted to dispense different kinds of coffee-based drinks have also been developed.

Such coffee machines are capable, for instance, of dispensing coffee-based drinks starting from different coffee blends.

US 6101923 discloses a fully automatic coffee machine in which coffee beans are received in a container having a partition wall defining two separate compartments, which allows two different blends of coffee to be used. In order to prepare a coffee-based drink starting from the desired coffee blend, each compartment of this container is connected through its own funnel to a separate, dedicated grinder. The freshly ground powder thus obtained can successively be supplied to a first or to a second brewing chamber for the preparation of the desired coffee-based drink.

US 2010/0224075 discloses a fully automatic coffee machine comprising at least two brewing groups for producing a coffee beverage, which groups are independent from each other and can be separately controlled, a device for the preparation and distribution of the coffee powder to the brewing groups as well as a common coffee dispensing outlet. Each brewing group has a different geometry, as it has been found that the quality of a specific coffee-based drink can be improved by an appropriate brewing group geometry. The coffee machine further comprises several storage containers which hold different sorts of coffee beans, so that, thanks to the possibility of selecting the sort of coffee beans and the brewing group, a large variety of coffee-based drinks can be produced.

Although allowing to effectively obtain several kinds of different coffee-based drinks, the above-described coffee machines are not free from drawbacks.

These machines are generally bulky objects, which take a large amount of space and are often incompatible with modern and attractively designed restaurants.

Moreover, these machines include a high number of mechanical components, which involve a large amount of maintenance. The need for maintenance is also increased by the fact that, during use, such mechanical components are contaminated with coffee powder and exposed to water and coffee infusions.

The above drawbacks could be overcome by a coffee machine that, while providing the possibility of using different blends of coffee, comprises a single coffee grinder (and possibly a single brewing chamber), so as to obtain a coffee machine having a compact construction.

US 2014/014680 discloses a system for dosing coffee beans, comprising a coffee bean package provided with at least one wall which at least partly encloses an inner space for multiple dosages of coffee beans, and a coffee bean outlet for delivering coffee beans, and an apparatus provided with a coffee bean grinder, a coffee bean inlet for supplying coffee beans from the coffee bean package to the grinder, a connecting device for connecting the coffee bean package to the apparatus, so that the coffee bean outlet can be connected to the coffee bean inlet, and a dosing device provided with a dosing space which is arranged for feeding-through one predetermined dose of coffee beans from the coffee bean outlet to the coffee bean inlet.

FR 2 755 431 discloses a dispenser of coffee beans having fixed and movable parts: the movable part has a product reception and dispensing chamber; the fixed part circumscribes a space separated inside the container by a transverse wall and separated from the outside by a cover, both the wall and the cover being provided with a respective window. The movable part is inserted in the space between the wall and the cover and the reception chamber is rotated between two end positions at which said chamber faces either the wall window, for product reception, or the cover window for product dispensing.

EP 605 750 discloses a coffee machine with a storage container for coffee beans, a metering device for coffee beans, a grinding device and a brewing device. The metering device contains at least one metering chamber rotatable about a vertical axis and a closing device sealing the metering chamber with respect to the storage container and the grinding device as well as establishing the desired connection.

The main object of the present invention is therefore to provide a coffee bean feeder which is capable of selectively feeding coffee beans coming from a coffee bean container chosen among a plurality of coffee bean containers to a grinding unit, preferably to a grinding unit comprising a single coffee grinder.

Another object of the present invention is to provide a selecting unit for selecting a coffee blend to be used for preparing a coffee-based drink among a plurality of coffee blends.

A further object of the present invention is to provide a coffee machine, preferably a fully automatic coffee machine, which is capable of preparing a plurality of different coffee-based drinks starting from a coffee blend selected among a plurality of coffee blends.

These and other objects are achieved by a coffee bean feeder as claimed in the appended claims, by a selecting unit comprising such feeder and by a coffee machine comprising such selecting unit.

According to the invention, the coffee bean feeder has a substantially cylindrical shape, it comprises an inlet and an outlet, the inlet being arranged in a position offset with respect to the position of the outlet in the circumferential direction, and it is intended to be arranged with its inlet below and in alignment with the outlet of a coffee bean container, and with its outlet above and in alignment with the inlet of a conveying element, such as a funnel.

The coffee bean feeder according to the invention comprises a substantially cylindrical body, which is rotatable about the longitudinal axis of the feeder and is provided with one or more dosing compartments.

By rotating the feeder body about the feeder longitudinal axis, a dosing compartment can be brought into alignment with the inlet of said feeder or with the outlet of said feeder or with neither of them.

When (and only when) the dosing compartment is aligned with the inlet of the feeder, a dose of coffee beans can be transferred from the coffee bean container to said dosing compartment; when (and only when) the dosing compartment is aligned with the outlet of the feeder, said dose of coffee beans can be transferred from said dosing compartment to the conveying funnel and, from there, to a coffee grinder.

Therefore, by adequately controlling the rotation of the rotatable body of the feeder, said feeder can selectively transfer the coffee beans coming from a coffee bean container to a grinding unit.

The rotatable body of the feeder is made as a solid body and the dosing compartment is made as a cavity in said solid body.

In order to increase the versatility of the coffee bean feeder, it is possible to envisage that the rotatable body is mounted to the feeder in a removable way, so that a first rotatable body with a first number of dosing compartments having a first size can be replaced by a second rotatable body with a second number of dosing compartments having a second size, so that the same coffee bean feeder can be used for supplying different doses of coffee beans to a grinding unit.

According to the invention, the rotatable body of the feeder is made as a body having a solid core and a plurality of radial partitions, so that corresponding cavities are defined between each pair of adjacent partitions, and said partitions are mounted to the solid core in a removable way, for instance by providing the solid core with a plurality of seats in which the partitions are removably received. In this way, the number and size of the dosing compartments can be chosen each time by adequately positioning said partitions in said seats.

The invention also relates to a selecting unit comprising a plurality of feeders as disclosed above and a common conveying element, such as a common funnel.

Each feeder of the selecting unit is intended to be arranged with its inlet below and in alignment with the outlet of a respective coffee bean container of a plurality of coffee bean containers and with its outlet above and in alignment with the inlet of the common funnel.

Therefore, by adequately controlling the rotation of the rotatable bodies of the feeders, the coffee beans coming from the desired container(s) can be selectively fed to the funnel, and then to a grinding unit.

The invention also relates to a coffee machine comprising a selecting unit as disclosed above.

Said coffee machine comprises several coffee bean containers for receiving different blends of coffee, a grinding unit for grinding the coffee beans coming from one or more of said containers, and a brewing unit for receiving the coffee powder coming from said grinding unit and preparing a desired coffee-based drink, the aforesaid selecting unit being interposed between the coffee bean containers and the grinding unit.

Preferably, the grinding unit of said coffee machine comprises a single grinder.

Preferably, the brewing unit of said coffee machine comprises a single brewing chamber.

Further features and advantages will be more evident from the detailed description of a preferred embodiment of the invention, given by way of non-limiting example, with reference to the accompanying drawings, in which:
Fig. 1

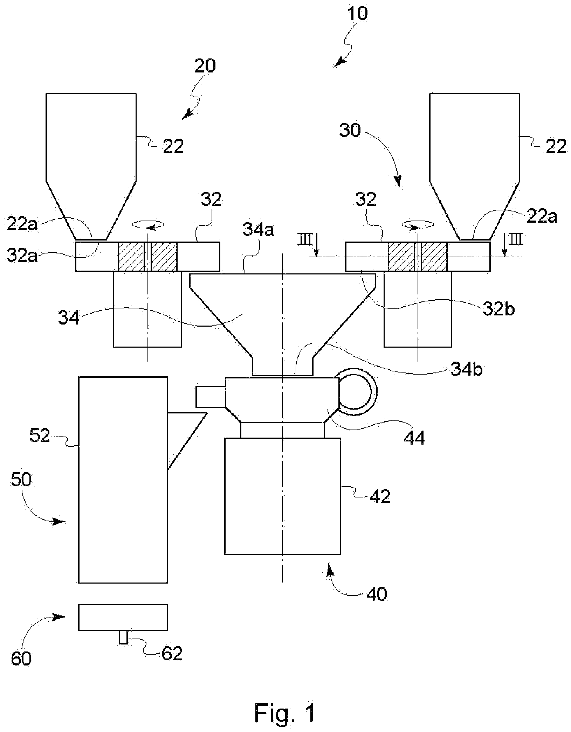

   Figure 1 schematically shows the construction of a coffee machine including a plurality of coffee bean feeders according to the invention;
Fig. 2

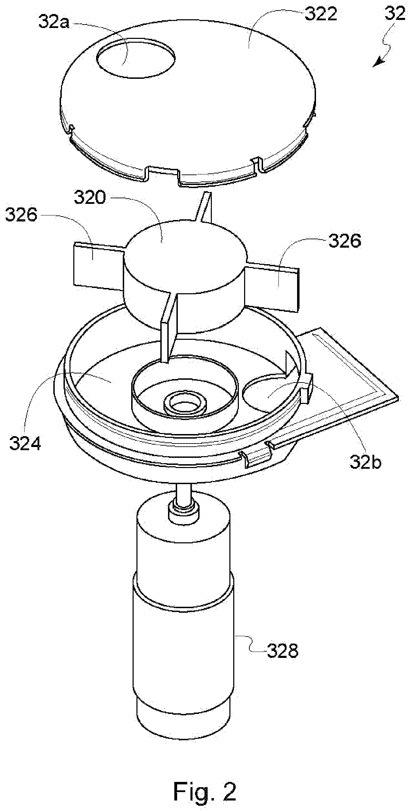

   Figure 2 is a perspective view of one of the coffee bean feeders of the coffee machine of Figure 1;
Fig. 3

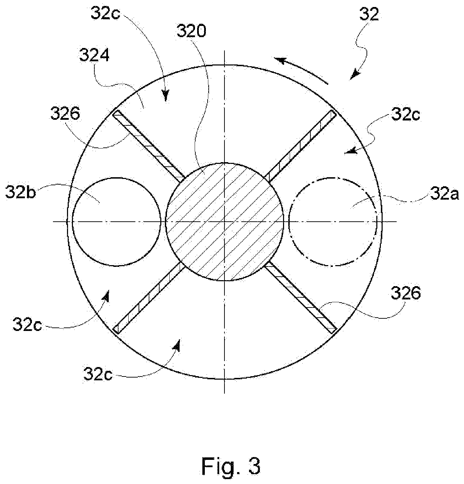

   Figure 3 is a cross-sectional view of the coffee bean feeder of Figure 2.

With reference to Figure 1, a coffee machine 10 according to the invention is schematically shown.

Preferably, the coffee machine 10 is a fully automatic coffee machine ("coffee automat"), i.e. a coffee machine in which the production of a coffee-based drink is started and carried out by simply selecting a desired drink from a menu (for instance by pressing a button).

The coffee machine 10 is designed so as to be capable of producing different coffee-based drinks starting from different coffee blends (e.g. Arabica blend, Robusta blend, decaffeinated blend, and so on).

To this purpose, the coffee machine 10 comprises a coffee bean supplying unit 20 including a plurality of separate coffee bean containers 22.

In Figure 1, two coffee bean containers 22 can be seen. It is evident that any desired number of different coffee bean containers can be envisaged. Four coffee bean containers could be considered as a good compromise between the possibility of preparing coffee-based drinks from different coffee blends and the advantage of providing a coffee machine with a compact construction.

Each coffee bean container 22 may contain a different blend of coffee beans.

The coffee machine 10 further comprises a grinding unit 40, preferably including a single grinder 42.

According to the invention, the coffee machine 10 comprises a selecting unit 30 that is arranged between the coffee bean containers 22 of the coffee bean supplying unit 20 and the grinder 42 of the grinding unit 40 and comprises a plurality of coffee bean feeders 32 for selectively transferring coffee beans from one or more of said containers of the coffee bean supplying unit 20 to the grinding unit 40.

Each coffee bean feeder 32 has an inlet 32a and an outlet 32b and is arranged with its inlet 32a below and in alignment with the outlet 22a of a respective coffee bean container, and with its outlet 32b above and in alignment with the inlet 34a of a common conveying funnel 34 of the selecting unit 30.

The feeder inlet 32a is offset with respect to the feeder outlet 32b in the circumferential direction.

The common funnel 34 is sized and arranged so that its inlet 34a is arranged below the outlets 32b of all the coffee bean feeders 32 and its outlet 34b is above the inlet of the grinding unit 40.

A coffee bean feeder 32 according to the invention is shown in greater detail in Figures 2 and 3.

Said coffee bean feeder has a substantially cylindrical shape and includes an upper plate 322, in which the inlet 32a is defined, a lower plate 324, in which the outlet 32b is defined, and a body 320, which is arranged between the upper and lower plates 322, 324.

The upper and lower plates 322, 324 are stationary, whereas the body 320 is rotatable about its longitudinal axis. To this purpose, the body 320 of the feeder 32 can be operatively connected to a motor 328 (preferable an electric motor 328) and driven in rotation by said motor.

The body 320 of the feeder 32 is a solid body, in which one or more dosing compartments 32c are provided.

The dosing compartments 32c are made as cavities defined in the solid body 320 of the feeder and mutually separated by partitions 326.

In the shown embodiment, four dosing compartments 32c are provided, mutually separated by four partitions 326.

In a particularly preferred embodiment of the invention, the rotatable body 320 is removably mounted between the upper and lower plates 322, 324. Accordingly, a different rotatable body, with a different number of dosing compartments and/or with dosing compartments having a different size, can be mounted each time to the feeder according to the needs of the specific application.

According to the invention, the partitions 326 are removably mounted to the solid core of the rotatable body 320, which to this purpose is provided with a plurality of seats. Accordingly, by connecting an adequate number of partitions at the adequate locations, a rotatable body with the desired number of dosing compartments having the desired size can be obtained each time according to the needs of the specific application.

By rotating the rotatable body 320 of the feeder 32 about its axis, a dosing compartment 32c can be brought into alignment with the inlet 32a of the feeder 32 or with the outlet 32b of said feeder 32 or with neither of them.

If the dosing compartment 32c is brought into alignment with the inlet 32a of the feeder (which is arranged under the outlet 22a of the respective coffee bean container 22), a dose of coffee beans can fall from the coffee bean container 22 into the dosing compartment 32c.

As long as said dosing compartment 32c is not in alignment with the outlet 32b of the feeder, said dose of coffee beans cannot be transferred to conveying funnel 34 and to the grinding unit 40.

When the dosing compartment 32c is brought into alignment with the outlet 32b of the feeder 32 (which is arranged over the inlet 34a of the common funnel 34), said dose of coffee beans can fall from the feeder 32 into the funnel 34.

Therefore, by adequately controlling the rotation of the bodies of the different feeders 32, the coffee beans coming from the desired container(s) 22 can be selected by the selecting unit 30 and transferred to the grinding unit 40.

Preferably, the grinding unit 40 comprises a single grinder 42, which allows to design the coffee machine 10 according to the invention with a very compact construction.

The grinder 42 grinds the selected dose of coffee beans coming from the funnel 34 of the selecting unit 30, thus allowing to obtain the correct dose of coffee powder.

This dose of freshly ground coffee powder is transferred from the grinding unit 40 to the brewing unit 50.

Preferably, this brewing unit 50 comprises a single brewing chamber 52, which further enhances the compactness of the construction of the coffee machine 10.

In a per se known manner, the dose of coffee powder is compacted and compressed in the brewing chamber so as to obtain a coffee "cake" and a flow of water at predetermined temperature and pressure is passed through the coffee "cake", thus obtaining a coffee infusion.

Such coffee infusion is transferred through a piping to a dispensing unit 60.

The dispensing unit 60 comprises an outlet spout 62, through which the coffee-based drink can be delivered into a cup.

One or more additional functional units can be optionally provided in the coffee machine 10, e.g. for adding additional ingredients to the coffee-based drink.

Preferably, the coffee machine 10 according to the invention further comprises a user interface (not shown), through which the user can select the desired coffee-based drink. In addition or as an alternative to the interface provided in the coffee machine 10, it is possible to envisage that the user can select his/her drink through a separate inputting device, even a remote device, such as a computer, a cell phone or the like.

The coffee machine 10 further comprises a control unit (not shown) arranged to control the operation of the selecting unit 30, of the grinding unit 40 and/or of the brewing unit 50 (as well as of the other functional units, if any) depending on the drink selected by the user through the above-mentioned interface or through another inputting device.

The control unit of the coffee machine is arranged to control, among others, the rotation of the rotatable bodies of the coffee bean feeders 32 of the selecting unit 30, so as to transfer the coffee beans coming from the desired coffee bean container(s) 22 to the grinding unit 40.

The control unit of the coffee machine may be connected to a memory in which the recipes of the available coffee-based drinks are stored, so that this control unit can control the coffee machine parameters according to the details of the recipe of the selected drink.

More particularly, this control unit can control the coffee bean feeders 32 of the selecting unit 30 according to the details of the recipe of the selected drink (i.e. to the blend indicated in the recipe).

Said memory can be either a memory unit installed in the coffee machine 10 and connected to the control unit or an external memory arranged elsewhere, even in a remote location, and in communication with the control unit.

It will be evident to the person skilled in the art that the above description of a preferred embodiment of the invention has been given merely by way of example and that several variants and modifications within the reach of the person skilled in the art can be envisaged, without departing from the scope of protection of the appended claims.

For instance, in case a large number of different coffee bean blends is to be handled, it is possible to envisage a coffee machine comprising a plurality of separate coffee bean containers and a plurality of selecting units, each of said selecting unit being arranged so as to selectively transfer coffee beans from at least two of said plurality of separate coffee bean containers to a grinding unit.

## Claims

1. Coffee bean feeder (32), intended to be interposed between a coffee bean container (22) and a coffee bean conveying element (34), wherein this feeder has an inlet (32a) and an outlet (32b), wherein said feeder is intended to be arranged with its inlet (32a) below and in alignment with an outlet of said coffee bean container and with its outlet (32b) above and in alignment with an inlet of said conveying element, wherein said coffee bean feeder (32) includes a stationary upper plate (322), in which said feeder inlet (32a) is defined, a stationary lower plate (324), in which said feeder outlet (32b) is defined, and a body (320), which is arranged between said upper and lower plates (322, 324), is provided with a plurality of coffee bean dosing compartments (32c) and is rotatable about its longitudinal axis, wherein said dosing compartments (32c) are made as cavities defined in said feeder body (320) and mutually separated by partitions (326), **characterized in that** said feeder body (320) comprises a solid core and the partitions are removably mounted to said solid core, so that the number and/or the position of said partitions can be modified.

2. Coffee bean feeder (32) according to claim 1, wherein said feeder has a substantially cylindrical shape and said feeder inlet (32a) is offset with respect to said feeder outlet (32b) in the circumferential direction.

3. Coffee bean feeder (32) according to any of the claims 1 - 2, wherein said rotatable body (320) is removably mounted to said feeder, so that a first rotatable body is replaceable by a second rotatable body with a different number of dosing compartments and/or with dosing compartments having a different size.

4. Coffee bean feeder (32) according to any of the preceding claims, wherein said feeder body (320) is operatively connected to a motor (328) and is driven in rotation by said motor.

5. Selecting unit (30), **characterized in that** it comprises one or more coffee bean feeders (32) according to any of the claims 1 - 4 and a coffee bean conveying element (34).

6. Selecting unit (30) according to claim 5, wherein said selecting unit (30) comprises a plurality of coffee bean feeders (32) and the inlet (34a) of said coffee bean conveying element (34) is sized and arranged so as to be below and in alignment with the outlets (32b) of said feeders.

7. Selecting unit (30) according to claim 5 or 6, wherein said coffee bean conveying element is made as a funnel (34).

8. Coffee machine (10), comprising a coffee bean supplying unit (20), a grinding unit (40), a brewing unit (50) and a dispensing unit (60), **characterized in that** it comprises a selecting unit (30) according to any of the claims 5 - 7 , which selecting unit is arranged between said coffee bean supplying unit (20) and said grinding unit (40).

## Patentansprüche

1. Kaffeebohnenzuführvorrichtung (32), die dafür ausgelegt ist, zwischen einem Kaffeebohnenbehälter (22) und einem Kaffeebohnenförderelement (34) angeordnet zu werden, wobei die Zuführvorrichtung einen Einlass (32a) und einen Auslass (32b) aufweist, wobei die Zuführvorrichtung dafür ausgelegt ist, mit ihrem Einlass (32a) unterhalb von einem Auslass des Kaffeebohnenbehälters und darauf ausgerichtet und mit ihrem Auslass (32b) oberhalb von einem Einlass des Kaffeebohnenförderelements und darauf ausgerichtet angeordnet zu werden, wobei die Kaffeebohnenzuführvorrichtung (32) eine stationäre obere Platte (332), in welcher der Zuführeinlass (32a) ausgebildet ist, eine stationäre untere Platte (324), in welcher der Zuführauslass (32b) ausgebildet ist, und einen Körper (320) aufweist, der zwischen der oberen und der unteren Platte (322, 324) angeordnet, mit mehreren Kaffeebohnendosierfächern (332) versehen und um eine Längsachse drehbar ist, wobei die Dosierfächer (32c) als Aussparungen in dem Zuführkörper (320) ausgebildet und voneinander durch Abtrennungen (326) getrennt sind, **dadurch gekennzeichnet, dass** der Zuführkörper (320) einen massiven Kern aufweist und die Abtrennungen abnehmbar an dem massiven Kern vorgesehen sind, sodass die Anzahl und/oder die Position der Abtrennungen verändert werden kann.

2. Kaffeebohnenzuführvorrichtung (32) nach Anspruch 1, wobei die Zuführvorrichtung eine im Wesentlichen zylindrische Form hat und der Zuführeinlass (32a) in Bezug auf den Zuführauslass (32b) in Umfangsrichtung versetzt ist.

3. Kaffeebohnenzuführvorrichtung (32) nach einem der Ansprüche 1 bis 2, wobei der drehbare Körper (320) abnehmbar an der Zuführvorrichtung montiert ist, sodass ein erster drehbarer Körper durch einen zweiten drehbaren Körper mit einer anderen Anzahl von Dosierfächern und/oder Dosierfächern anderer Größe ersetzt werden kann.

4. Kaffeebohnenzuführvorrichtung (32) nach einem der vorstehenden Ansprüche, wobei der Zuführkörper (320) betriebsfähig an einen Motor (328) angeschlossen ist und von dem Motor in Drehung versetzt wird.

5. Auswahleinheit (30) **dadurch gekennzeichnet, dass** sie eine oder mehrere Kaffeebohnenzuführvorrichtungen (32) nach einem der Ansprüche 1 bis 4 und ein Kaffeebohnenförderelement (34) aufweist.

6. Auswahleinheit (30) nach Anspruch 5, wobei die Auswahleinheit (30) mehrere Kaffeebohnenzuführvorrichtungen (32) aufweist und der Einlass (34a) des Kaffeebohnenförderelements (34) so bemessen und unterhalb von den Auslässen (32b) der Zuführvorrichtungen angeordnet ist, dass er auf sie ausgerichtet ist.

7. Auswahleinheit (30) nach Anspruch 5 oder 6, wobei das Kaffeebohnenförderelement als ein Trichter (34) ausgebildet ist.

8. Kaffeemaschine (10) mit einer Kaffeebohnenversorgungseinheit (20) einer Mahleinheit (40), einer Braueinheit (50) und einer Ausgabeeinheit (60), **dadurch gekennzeichnet, dass** sie eine Auswahleinheit (30) nach einem der Ansprüche 5 bis 7 aufweist, wobei die Auswahleinheit zwischen der Kaffeebohnenzuführeinheit (20) und der Mahleinheit (40) angeordnet ist.

## Revendications

1. - Dispositif (32) de distribution de grains de café, destiné à être interposé entre un récipient de grains de café (22) et un élément (34) de transport de grains de café, dans lequel ce dispositif de distribution a une entrée (32a) et une sortie (32b), dans lequel ledit dispositif de distribution est destiné à être disposé avec son entrée (32a) au-dessous et en alignement avec une sortie dudit récipient de grains de café et avec sa sortie (32b) au-dessus et en alignement avec une entrée dudit élément de transport, dans lequel ledit dispositif (32) de distribution de grains de café comprend une plaque supérieure stationnaire (322), dans laquelle ladite entrée (32a) du dispositif de distribution est définie, une plaque inférieure stationnaire (324), dans laquelle ladite sortie (32b) du dispositif de distribution est définie, et un corps (320), qui est disposé entre lesdites plaques supérieure et inférieure (322, 324), comporte une pluralité de compartiments (32c) de dosage de grains de café et est apte à tourner autour de son axe longitudinal, dans lequel lesdits compartiments de dosage (32c) sont réalisés sous la forme de cavités définies dans ledit corps (320) du dispositif de distribution et séparées mutuellement par des cloisons (326), **caractérisé par le fait que** ledit corps (320) du dispositif de distribution comprend un cœur plein et les cloisons sont montées de manière amovible sur ledit cœur plein, de telle sorte que le nombre et/ou la position desdites cloisons peuvent être modifiés.

2. - Dispositif (32) de distribution de grains de café selon la revendication 1, dans lequel ledit dispositif de distribution a une forme sensiblement cylindrique et ladite entrée (32a) du dispositif de distribution est décalée par rapport à ladite sortie (32b) du dispositif de distribution dans la direction périphérique.

3. - Dispositif (32) de distribution de grains de café selon l'une quelconque des revendications 1 et 2, dans lequel ledit corps rotatif (320) est monté de manière amovible sur ledit dispositif de distribution, de telle sorte qu'un premier corps rotatif est remplaçable par un second corps rotatif avec un nombre différent de compartiments de dosage et/ou avec des compartiments de dosage ayant une dimension différente.

4. - Dispositif (32) de distribution de grains de café selon l'une quelconque des revendications précédentes, dans lequel ledit corps (320) du dispositif de distribution est relié de manière fonctionnelle à un moteur (328) et est entraîné en rotation par ledit moteur.

5. - Unité de sélection (30), **caractérisée par le fait qu'**elle comprend un ou plusieurs dispositifs (32) de distribution de grains de café selon l'une quelconque des revendications 1 à 4 et un élément (34) de transport des grains de café.

6. - Unité de sélection (30) selon la revendication 5, dans laquelle ladite unité de sélection (30) comprend une pluralité de dispositifs (32) de distribution de grains de café et l'entrée (34a) dudit élément (34) de transport de grains de café est dimensionnée et disposée de façon à être au-dessous et en alignement avec les sorties (32b) desdits dispositifs de distribution.

7. - Unité de sélection (30) selon l'une des revendications 5 ou 6, dans laquelle ledit élément de transport des grains de café est réalisé sous la forme d'un entonnoir (34).

8. - Machine à café (10), comprenant une unité (20) d'alimentation en grains de café, une unité de mouture (40), une unité d'infusion (50) et une unité de distribution (60), **caractérisée par le fait qu'**elle comprend une unité de sélection (30) selon l'une quelconque des revendications 5 à 7, laquelle unité de sélection est disposée entre ladite unité (20) d'alimentation en grains de café et ladite unité de mouture (40).
